# EUROPÄISCHE PATENTSCHRIFT

(11) **EP 1 728 739 B1**
(45) Veröffentlichungstag und Bekanntmachung des Hinweises auf die Patenterteilung: **23.07.2008**
(21) Anmeldenummer: 05015225.5
(22) Anmeldetag: 13.07.2005
(51) Int. Cl.: B65G 17/44, B65G 17/02

(54) **Fördervorrichtung für Schüttgüter**
Conveyor for bulk material
Convoyeur de matériaux en vrac

(30) Priorität: 31.05.2005 DE 202005008426 U
(43) Veröffentlichungstag der Anmeldung: 06.12.2006
(60) Teilanmeldung: 08007009.7
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse Patentanwälte

(56) Entgegenhaltungen:
- EP-A- 1 300 062

## Beschreibung

Die vorliegende Erfindung bezieht sich auf eine Fördervorrichtung mit einem Tragrahmen und einem Förderorgan, das zumindest zwei parallel zueinander umlaufend angetriebene Förderriemen und ein zwischen den Förderriemen angeordnetes Fördertuch aufweist.

Fördervorrichtungen für Schüttgüter sind in einer Vielzahl von Ausgestaltungen bekannt. Die von der Fördervorrichtung zu transportierenden Schüttgüter werden an einem Punkt A auf das endlos umlaufende Förderorgan aufgegeben und bis zum einem Punkt B transportiert, an dem die Schüttgüter oder andere Transportgüter wieder abgegeben werden. Damit die zu befördernden Güter nicht seitlich vom Förderorgan herabfallen können, sind die bekannten Fördervorrichtungen mit Stützteilen versehen, die sich über die Ebene der Ablageflächen des Förderorgans erheben und Transportstücke, die vom Förderorgan herabzufallen drohen, zurückhalten sollen.

Aus dem Stand der Technik ist eine gattungsgemäße Fördervorrichtung aus dem deutschen Gebrauchsmuster DE 201 16 382 U1 bekannt. Die gattungsgemäßen Fördervorrichtungen weisen an sich zufriedenstellende Förderleistungen auf. Im Anstoßbereich der zwischen den Förderriemen angeordneten Fördertücher ergibt sich jedoch das Problem, das Material in den Spalt zwischen dem Fördertuch und den Förderriemen rutschen und von dort aus auch verlorengehen kann. Auch ist es je nach befördertem Transportgut möglich, daß sich im Anstoßbereich Transportgut oder Schmutzpartikel ansammeln und sich nach und nach zu einem Materialnest aufbauen, durch das das Fördertuch im Anstoßbereich aufgebeult wird. Dadurch vergrößert sich der Spalt zu einem Loch, das zu erhöhten Verlusten führt. Auch kann ein zunehmender Materialaufbau letztendlich dazu führen, daß das Fördertuch einreißt und ausgetauscht werden muß

Eine gattungsgemäße Fördervorrichtung ist auch aus der Schrift BP 1 300 062 A1 bekannt. In dieser Schrift ist ein Fördertuch gezeigt, das in einer Ausgestaltung vollständig zwischen den Förderriemen liegt und in einer anderen Ausgestaltung über seitliche Verbindungsansätze verfügt, die bis in den Bereich der Förderriemen überlappen und dort mit dem Tragmittel mit dem Förderriemen vernietet sind. Trotz der Verbindungsansätze bleibt das Problem, dass sich im Bereich zwischen zwei benachbarten Verbindungsansätzen Material im Spalt zwischen dem Fördertuch und den Förderriemen ansammeln kann, was zu den vorstehend beschriebenen Problemen führt.

Die Stützteile können fest am Tragrahmen befestigt sein. Bei einer solchen Anordnung ergibt sich jedoch der Nachteil, daß die zu befördernden Transportgüter an den Stützteilen entlang schleifen und dadurch abgebremst werden. Hierdurch entstehen Leistungsverluste und die Transportgüter selber neigen dazu, aufgrund des Bremseffektes liegen zu bleiben und bei einer schrägen Beförderungsstrecke nach unten zu rollen. Zudem können empfindliche Transportgüter, wie beispielsweise Erntegüter, von den Stützteilen durch Reibung oder Einklemmen beschädigt werden.

Demgemäß ist es die Aufgabe der vorliegenden Erfindung, eine Fördervorrichtung zu schaffen, bei der ein Materialaufbau im Übergangsbereich vom Fördertuch zum Förderriemen nach Möglichkeit vermieden, die Transportgüter besser gegen einen ungewollten Verlust durch Herabfallen gesichert, der Materialverschleiß an den Bauteilen der Fördervorrichtung verringert und das Risiko einer Beschädigung durch die Transportvorrichtung vermindert wird.

Die Aufgabe wird für die gattungsgemäße Transportvorrichtung gelöst, indem die Förderriemen an ihren einander zugewandten Innenseiten Ausnehmungen aufweisen, die sich über die volle Länge der Förderriemen erstrecken, in die Ausnehmungen seitliche Ränder des Fördertuchs eingelegt sind, und das Fördertuch im Bereich der Ausnehmungen über die Ränder mit den Förderriemen verbunden ist, so daß sich über die gesamte Länge der Fördervorrichtung eine vollkommen dichte Anbindung der Ränder des Fördertuchs an die Förderriemen ergibt.

Durch die Ausnehmungen im Förderriemen, die sich über die volle Länge des Förderriemens erstrecken, wird Platz geschaffen, um das Fördertuch über den Zwischenraum zwischen den beabstandeten Förderriemen hinaus bis in den Bereich der Förderriemen mit diesen überlappend zu führen, um den sich im Stand der Technik im Anstoßbereich ergebenden Spalt über die Länge des Förderriemens zu überbrücken. Durch die Ausnehmung kann das Fördertuch in den Volumenschatten des Förderriemens eingelegt werden, so daß es nicht an einzelnen Stellen hochsteht und neue Spalte entstehen, durch die wiederum Fördergut oder Schmutzpartikel eindringen und sich aufbauen können oder Transportgut verloren gehen kann. Durch die Seitenflächen der Ausnehmung im Förderriemen entstehen glatte Befestigungsflächen, an denen das Fördertuch mit dem Förderriemen verbunden werden kann. Durch die direkte Verbindung des Förderriemens mit dem Fördertuch können die auf den Förderriemen wirkenden Antriebskräfte gleichmäßig auf das Fördertuch übertragen werden. Gleichzeitig ermöglicht die Verbindung des Fördertuches mit den Förderriemen im Bereich der Ausnehmung eine gleichmäßige Übertragung von statischen oder dynamischen Kräften, die auf das Fördertuch einwirken, auf den Förderriemen. Dadurch, daß die Ränder des Fördertuches in die neutrale Phase des Förderriemens eingelegt werden, sind diese besonders gegen Beschädigungen geschützt. Schließlich ist es möglich, die Befestigung des Fördertuches mit der Befestigung von Querstäben, die zwischen den Förderriemen angebracht sein können, zu kombinieren.

Durch die erfindungsgemäße Ausgestaltung ergibt sich eine kostengünstige und leicht herzustellende Verbindung des Fördertuches mit den Förderriemen, bei der Spalte, in denen sich Gut aufbauen kann, vermieden werden und die Dauerhaltbarkeit des Fördertuches verbessert ist. Das Fördertuch kann an den Rändern nicht mehr so leicht ausfransen oder einreißen und innerhalb des Förderorgans ergibt sich eine insgesamt gleichmäßigere Verteilung der einwirkenden Kräfte.

Durch die Kombination der Befestigung des Fördertuchs mit Stützteilen im Bereich von Ausnehmungen im Förderriemen gemäß einer abgewandelten Ausgestaltung der Erfindung ist es möglich, eine dauerhaft dichte, trotzdem aber belastbare und flexible Übergangszone zu schaffen, in der Transportgüter nicht mehr beschädigt werden können. Die Seitenbegrenzung bewegt sich mit dem Fördertuch, so daß an den Seiten keine Reibung mit Stützteilen mehr auftritt. Durch die Anbringung des Fördertuchs und der Stützteile in einer Ausnehmung des Förderriemens bleiben die Stauch- und Dehnkräfte, die auf das Fördertuch und die Stützteile einwirken, im Bereich von Richtungsänderungen der Fördervorrichtung auf einem vergleichsweise niedrigen Niveau. Dadurch wird der Verschleiß und die Materialermüdung des Fördertuchs, der Stützteile und eventueller zusätzlicher Dichtungselemente gegenüber den vorbekannten Lösungen verringert. Bei der erfindungsgemäßen Gestaltung kann auf zusätzliche Dichtungsteile ganz verzichtet werden.

Gemäß einer weiteren Ausgestaltung der Erfindung weist das Förderorgan sich seitlich sich über die Ebene der Ablageflächen erhebende und über ein Basiselement und zumindest einen vom Basiselement aufragenden Finger verfügende Stützteile auf, und benachbarte Finger sind so angeordnet, daß diese auf einer geraden Transportebene des Förderorgans einen Zwischenraum zwischen sich begrenzen.

Mit dem Basiselement kann das Stützteil am Tragrahmen oder dem Förderorgan oder dem Tragmittel befestigt werden. Die Befestigung erfolgt dabei auf eine solche Art und Weise, daß sich der vom Basiselement aufragende Finger auch über die Ebene der Ablageflächen erhebt und auf diese Weise bei einer seitlichen Anordnung zur Ablagefläche des Förderorgans eine Stützwirkung für das auf dem Förderorgan beförderte Transportgut entfalten kann.

Durch den Zwischenraum zwischen zwei benachbarten Fingern können die Finger im Bereich der Umlenkung des Förderorgans in oder entgegen der Förderrichtung des Förderorgans verschwenkt werden, ohne daß die Finger dabei zwangsläufig aufeinander reiben müssen. Der Zwischenraum kann so weit reichen, daß er sich weitgehend über die gesamte Höhe eines Fingers erstreckt, er kann jedoch auch kürzer ausfallen, soweit die dann noch gegebene Flexibilität in Förderrichtung ausreicht, um sich an die Biegeradien anzupassen, um die das Förderorgan geführt ist.

Ändert sich die Bewegungsrichtung des Basiselementes infolge einer Umlenkung der Förderrichtung des Förderorgans, so kann ein an diesem Basiselement befestigter Finger ebenfalls um eine Querachse verschwenkt werden und dadurch seine Lage im Raum verändern. Bei einer solchen Veränderung der Raumlage schwenkt der Finger zunächst in den freien Zwischenraum, durch den der verschwenkte Finger vom benachbart angeordneten Finger getrennt wird. Da sich der verschwenkte Finger durch einen Freiraum bewegt, bleibt eine solche Verschwenkbewegung vollkommen verschleißfrei. Erst bei größeren Winkellagen, um die ein Finger verschwenkt wird, stößt dieser an einen benachbart angeordneten Finger an.

Wenn die Finger aus einem zumindest geringfügig flexiblen Material hergestellt sind, können sich diese bei einem Auftreffen auf einen benachbarten Finger leicht beiseite bewegen und auf diese Art aneinander vorbeigleiten. Der verschleißbehaftete Gleitkontakt zwischen zwei benachbart angeordneten Fingern ist jedoch nur auf die äußeren Spitzen der Finger beschränkt, die gleichzeitig jedoch am weitesten vom Basiselement entfernt liegen, so daß sich die Elastizität der Finger in diesem Bereich maximal auswirken und die Reibkräfte, mit denen die Oberflächen aufeinander reiben, in einem unkritischen Bereich gehalten werden können.

Aus der erfindungsgemäßen Anordnung der Finger ergibt ein weiterer Vorteil: Während großvolumigere Transportgüter, die auf dem Förderorgan befördert werden, zu groß sind, um durch die Zwischenräume zwischen den Fingern hindurchfallen zu können, ist es möglich, daß Schmutz und Sand durch die Zwischenräume aus dem Förderweg des Förderorgans herausfallen können. Auf diese Weise kann das zu befördernde Transportgut von Schmutz und Fremdpartikeln gereinigt werden.

Bei einem leistenförmig ausgebildeten Basiselement ergibt sich auf der Unterseite eine große Stützfläche, mit der das Basiselement auf dem Förderorgan und/oder dem umlaufenden Tragmittel befestigt werden kann. An einem Abschnitt eines Basiselementes können nebeneinander mehrere Finger mit einem jeweiligen Zwischenraum zwischen sich angeordnet sein. Durch die Montage eines einzelnen Basiselementes können auf diese Weise mehrere Finger am Förderorgan, dem umlaufenden Tragmittel und/oder dem Tragrahmen befestigt werden.

Ist das Basiselement des Stützteils aus einem flexiblen Material hergestellt, kann sich dieses auch engeren Biegeradien des Förderorgans oder des Tragmittels anpassen und mit diesen endlos umlaufen. Die Basiselemente der Stützteile können eine vergleichsweise flache Form aufweisen, so daß diese kaum über die Ablageflächen des Förderorgans hervorstehen. Bei einem flachen Querschnitt der Basiselemente sind diese bei einem Umlaufen nur vergleichsweise geringen Zug-, Druck- und Biegekräften ausgesetzt, so daß sich die Basiselemente gegenüber dem Förderorgan und/oder dem Tragmittel gar nicht oder in geringem Umfang relativ bewegen. Auf diese Weise wird der Verschleiß der Kontaktflächen minimal gehalten. Andererseits stellen die von den Basiselementen aufragenden Finger sicher, daß die Ablageflächen des Förderorgans seitlich gegen sonst eventuell herabfallende Transportgüter abgestützt werden.

Unabhängig davon, ob die Finger zusammengeschoben oder gespreizt werden, bleiben die Finger je nach Auswahl des Maßes für den Zwischenraum zwischen zwei Fingern in einem solchen Abstand zueinander, daß ein Herabfallen von Transportgütern von der Fördervorrichtung zuverlässig ausgeschlossen ist.

Weitere Verbesserungen und bevorzugte Ausgestaltungen der Erfindung lassen sich den kennzeichnenden Merkmalen der Unteransprüche, der nachfolgenden gegenständlichen Beschreibung und den Zeichnungen entnehmen.

Die Erfindung wird nun anhand eines Ausführungsbeispieles näher erläutert. Es zeigen:
- Fig. 1:: eine Ansicht auf eine Fördervorrichtung,
- Fig. 2:: eine Ansicht auf einen Ausschnitt eines Förderorgans,
- Fig. 3:: einen Querschnitt durch die Anbindungszone des Fördertuches an einem Förderriemen,

- Fig. 4:: eine Ansicht auf ein Stützteil,
- Fig. 5:: eine Ansicht auf ein alternativ gestaltetes Stützteil,
- Fig. 6:: eine Querschnittsansicht auf ein auf einem Fördertuch und auf einem Förderriemen befestigtes Stützteil, und
- Fig. 7:: eine Querschnittsansicht auf einen Förderriemen mit dem alternativ gestalteten Stützteil.

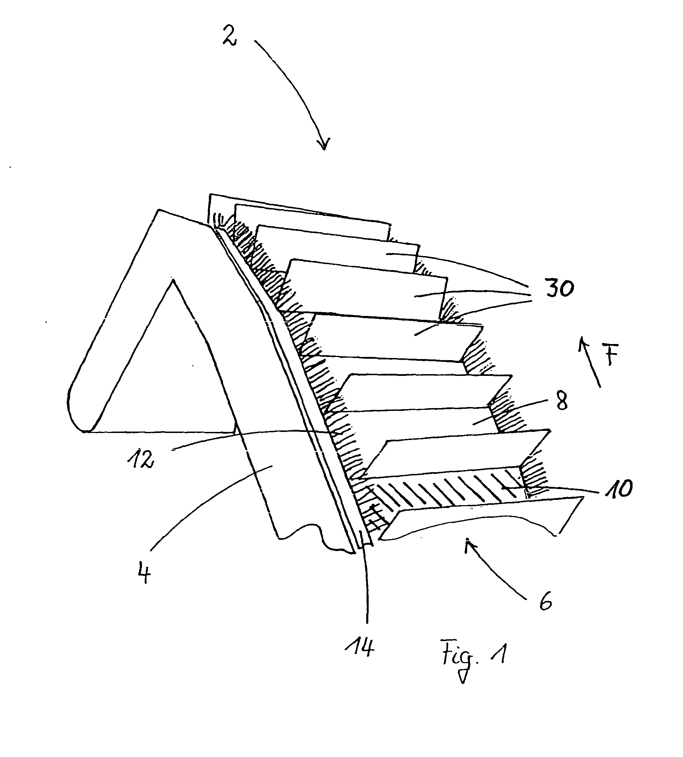

In Fig. 1 ist eine Fördervorrichtung 2 gezeigt, auf deren Tragrahmen 4 ein ausschnittsweise dargestelltes Förderorgan 6 endlos umlaufend angeordnet ist. Das Förderorgan 6 weist Ablageflächen 10 auf, die durch Trennelemente 30 voneinander abgetrennt sind. Das im Ausführungsbeispiel dargestellte Förderorgan 6 bewegt ein auf den Ablageflächen 10 eines Fördertuchs 8 liegendes Transportgut in die Förderrichtung F. Das auf den Ablageflächen 10 liegende Transportgut wird durch die Trennelemente 30 daran gehindert, entgegen der Förderrichtung F an dem Förderorgan 6 wieder herabzurollen. Um das Transportgut davon abzuhalten, seitlich von den Ablageflächen 10 herabzufallen, sind an den Seiten der Ablageflächen 10 des Förderorgans 6 Stützteile 12 angeordnet. Die Stützteile 12 könnten entweder auf dem Förderorgan 6 bzw. den Ablageflächen 10 des Förderorgans 6 befestigt sein, oder die Stützteile 12 sind fest mit dem Förderriemen 14 als Tragmittel verbunden. Als Förderriemen 14, die das Förderorgan 6 und das darauf liegende Transportgut tragen, kommen beispielsweise Zahnriemen, aber auch entsprechend gestaltete Ketten in Betracht. Natürlich kann das Förderorgan 6 während eines Umlaufens bereichsweise oder vollständig durch weitere Stützräder oder Stützflächen abgestützt werden. Im Ausführungsbeispiel kommt dem Förderiemen 14 die Funktion zu, neben einer Lagefixierung des Förderorgans 6 auch Antriebskräfte von einer Antriebsquelle auf das Förderorgan 6 zu übertragen.

In der Fig. 1 ist erkennbar, daß sich das Förderorgan 6 im dargestellten unteren Abschnitt in einer gerade aufwärts gerichteten Transportebene bewegt, während es zum oberen Drittel der sichtbaren Förderstrecke hin leicht in eine horizontale Richtung abknickt, dann am Scheitelpunkt schärfer in einer abwärts gerichtete Richtung umgelenkt wird, um sodann nach einer weiteren Förderstrecke um 180 ° um eine Umlenkwalze umlaufend zurückzulaufen. Im Ausführungsbeispiel ist die Untersicht der Fördervorrichtung 2 verkleidet, so daß dort das Förderorgan 6 dort nicht im Detail sichtbar ist.

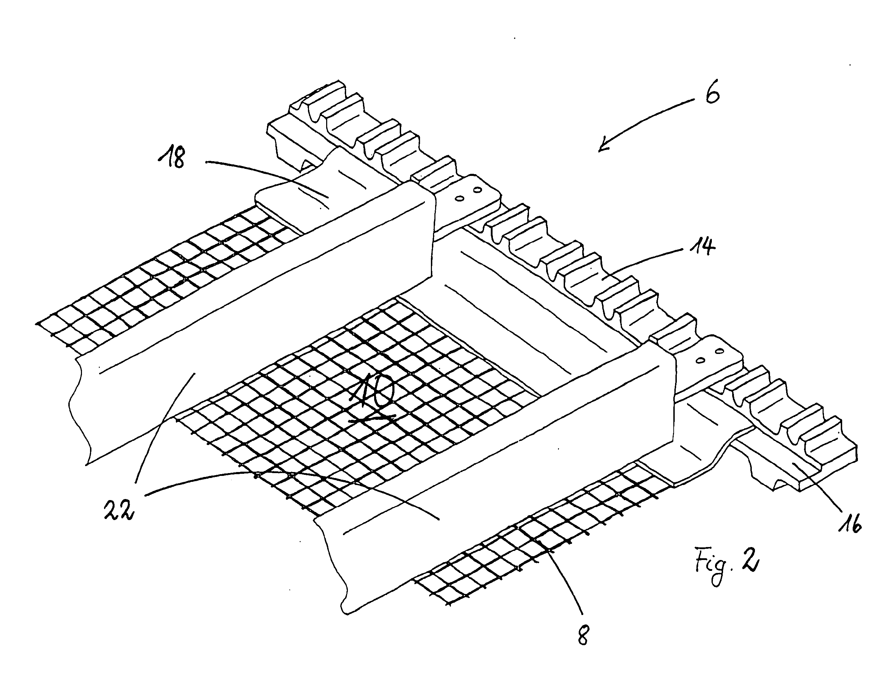

In Fig. 2 ist ein Ausschnitt eines Förderorgans 6 gezeigt, das endlos umlaufend angetrieben ist und auf seiner Oberfläche dort angesammeltes Transportgut in die Förderrichtung befördert. Das Förderorgan 6 setzt sich zusammen aus zwei parallel zueinander umlaufenden angetriebenen Förderriemen 14, wie beispielsweise Zahnriemen, die untereinander durch in Abständen über die Länge der Förderriemen 14 verteilt angeordnete Querstäbe 22 miteinander verbunden sind. Um eine für Förderzwecke geeignet geschlossene Oberfläche zu schaffen, erstreckt sich im Bereich zwischen den beabstandeten Förderriemen und den beabstandeten Querstäben 22 ein Fördertuch 8, auf dem Transportgüter befördert werden können. Die Querstäbe 22 und das Fördertuch 8 übertragen die Antriebsenergie der Förderriemen 14 auf die auf dem Förderorgan aufliegenden Transportgüter.

An ihren einander zugewandten Innenseiten weisen die Förderriemen 14 Ausnehmungen 16 auf. Bei den Ausnehmungen 16 handelt es sich jeweils um eine gegenüber dem übrigen Querschnitt der Förderriemen ausgeformte Vertiefung, die einen Raum schafft, in den der Rand 18 eines Fördertuches 8 einlegbar ist, ohne daß dieser über die übrige Kontur des Förderriemens 14 hervorsteht. Im Bereich der Ausnehmung 16 ist der Rand 18 des Fördertuches 8 mit dem Förderriemen 14 verbunden. Die Verbindung selbst kann durch bekannte Befestigungstechniken erfolgen, wie beispielsweise Nieten, Schrauben, Kleben, Nähen und dergleichen.

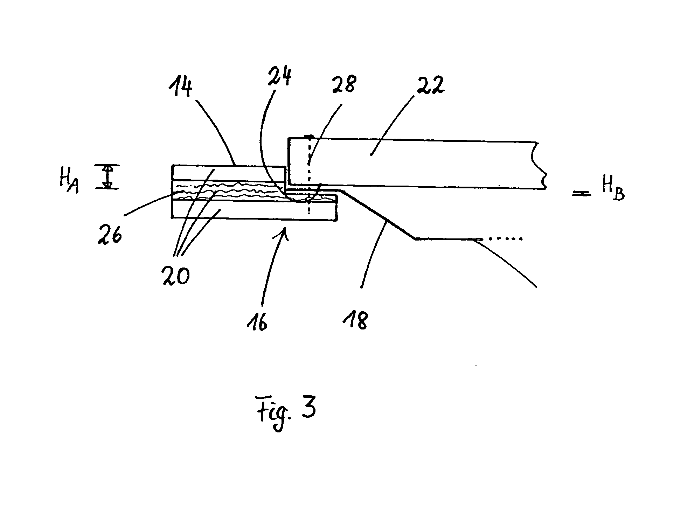

Durch die Einarbeitung einer Ausnehmung 16 in den Querschnitt eines Förderriemens 14 muß dessen Tauglichkeit als Antriebsmittel für das Förderorgan 6 nicht nachteilig beeinflußt werden. Eine solche Beeinträchtigung ist insbesondere dann ausgeschlossen, wenn der Förderriemen 14 mehrlagig aufgebaut ist und sich die Höhe der Ausnehmung 16 nicht über alle Lagen 20 des Förderriemens erstreckt, wie dies auch in Fig. 3 zeichnerisch dargestellt ist. Wie in Fig. 3 zu sehen ist, enthält die mittlere Lage 26 des Förderriemens 14 eine Gewebelage von Fasern, durch die auf den Förderriemen 14 einwirkenden Zugkräfte in Längsrichtung des Förderriemens 14 übertragen werden. Dadurch, daß sich die Ausnehmung 16 nicht über die volle Höhe H_{A} des Förderriemens 14 erstreckt, bleibt auch im Bereich der Ausnehmung 16 ein Teil der Gewebelage der mittleren Lage 26 erhalten. Gleichzeitig ist aus Fig. 3 ersichtlich, daß die Höhe H_{A} einer Ausnehmung 16 größer oder gleich der Höhe H_{B} der seitlichen Ränder 18 des Fördertuches 8 ist. Auch ist aus Fig. 3 ersichtlich, daß die Ausnehmung 16 eine Breite aufweist, die maximal der halben Breite des Förderriemens 14 entspricht.

Um den Rand 18 des Fördertuches 8 noch fester mit dem Förderriemen 14 zu verbinden, ist es möglich, die Querstäbe 22 mit ihrer Unterseite 24 im Bereich der Ausnehmungen 16 auf die seitlichen Ränder 18 des Fördertuches 8 aufzulegen. Die Querstäbe 22 können dann mit einer über die Ausnehmung 16 seitlich vorstehenden Lasche an den Förderriemen befestigt werden, und/oder die Querstäbe 22 werden mittels sich durch das Fördertuch 8 hindurch erstreckender Befestigungsmittel wie Nieten 28, Schrauben, Klammern und dergleichen mit den Förderriemen 14 verbunden.

Eine vollkommen dichte Anbindung der Ränder 18 an die Förderriemen 14 ergibt sich, wenn sich die Ausnehmungen 16 über die volle Länge der Förderriemen 14 erstrecken und auch die Ränder 18 über die volle Länge der Fördervorrichtung in die Ausnehmung 16 eingelegt sind.

Die seitlichen Ränder 18 des Fördertuches 8 lassen sich besonders gut im Bereich der Ausnehmungen 16 befestigen, wenn diese eine geschlossene Materialstruktur aufweisen. So können die Ränder 18 beispielsweise aus einer dicken Kunststoffolie, aus dichtem Gewebe, aus einem beschichteten Gewebe, aus einem Gummituch oder dergleichen bestehen. Indem die seitlichen Ränder 18 des Fördertuches 8 eine gewisse Flexibilität aufweisen, können diese Lastspitzen durch einwirkende statische oder dynamische Kräfte ausgleichen. Um stärker belastbar zu sein, können in die seitlichen Ränder 18 des Fördertuches 8 auch Faserverstärkungen eingearbeitet sein. Bei einem flexiblen Material für die seitlichen Ränder 18 kann sich dieses bei einem Umlauf des Förderorgans 6 besonders gut den dynamischen Gegebenheiten anpassen.

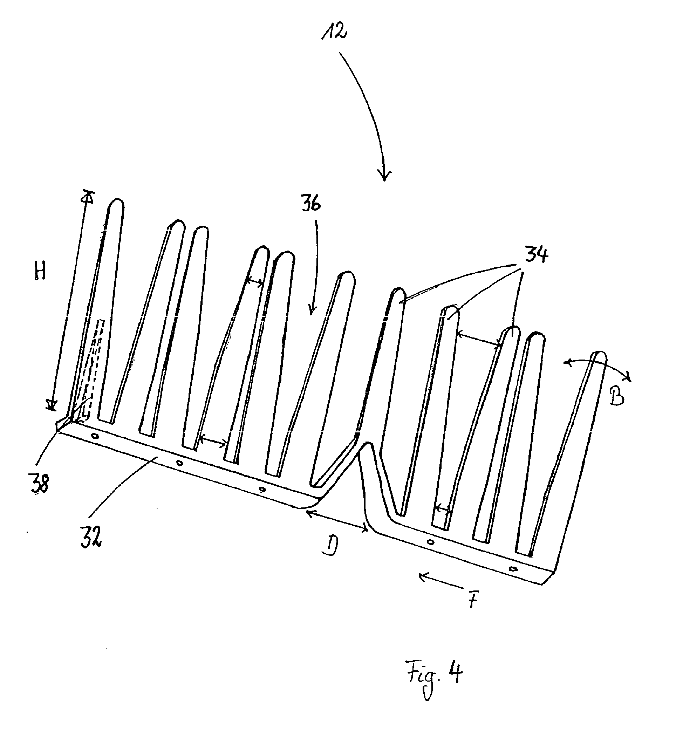

In Fig. 4 ist ein Ausführungsbeispiel eines Stützteiles 12 aus einer Ansicht von schräg unten gezeigt. Aus dieser Ansicht ist das Basiselement 32 gut erkennbar, das im Ausführungsbeispiel leistenförmig ausgebildet ist und das über eine Anzahl von Öffnungen auf dem Förderorgan 6 und/oder dem Förderriemen 14 befestigt werden kann. Mit dem Begriff "Basiselement" soll nicht ausgedrückt werden, daß es sich dabei um ein gesondertes Bauteil handeln muß, sondern es kann auch einstükkig zusammen mit einem oder mehreren Fingern 34 ein Stützteil 12 bilden. Das Basiselement 32 ist der Funktionsteil eines Stützteils 12, der einen oder mehrere Finger 34 mit dem Förderriemen 14 und/oder dem Förderorgan 6 beziehungsweise dem Fördertuch 8 verbindet. Das Basiselement 32 nimmt die auf einen oder mehrere Finger 34 einwirkenden seitlichen Biegekräfte auf und überträgt diese auf den Förderriemen 14 und/oder das Förderorgan 6 beziehungsweise das Fördertuch 8. Auch werden die Finger 34 über das Basiselement 32 in ihrer Einbauposition gehalten.

Vom Basiselement 32 ragen im in Fig. 4 gezeigten Ausführungsbeispiel insgesamt elf Finger 34 auf, die jeweils zwischen sich einen Zwischenraum 36 aufweisen. Die Zwischenräume 36 muß nicht selbst oder im Verhältnis zueinander geometrisch gleichmäßig ausgebildet sein, sondern können über ihre jeweilige Höhe und/oder in Förderrichtung F des Förderorgans 6 gesehen unterschiedliche Breitenmaße aufweisen. Im in Fig. 4 gezeigten Ausführungsbeispiel entspricht die Höhe H der Zwischenräume 36 jeweils der Höhe, die sich die Finger 34 vom Basiselement 32 erheben, die Zwischenräume 36 können jedoch auch kürzer ausgebildet sein und über eine geringere Höhe verfügen. Um eine ausreichende Flexibilität der Stützteile 12 insbesondere in Förderrichtung F zu gewährleisten, ist es vorteilhaft, wenn ein Zwischenraum 36 über mindestens die halbe Höhe eines angrenzenden Fingers 34 reicht.

Indem das Basiselement 32 in der Richtung quer zur Förderrichtung F eine größere Breite aufweist als die vom Basiselement 32 aufragenden Finger 34, ergibt sich in seitlicher Richtung eine hohe Abstützwirkung der Finger 34 durch das Basiselement 32.

Erreicht ein auf einem Förderorgan 6 oder einem Förderriemen 14 ortsfest montiertes Basiselement 16 einen Abschnitt der Fördervorrichtung 2, indem die Förderrichtung des Förderorgans 6 bzw. des Förderriemens 14 umgelenkt wird, so paßt sich der jeweils im Umlenkungsbereich befindliche Teil des Basiselementes 32 der neuen Förderrichtung F an, wenn dieses flexibel ausgebildet ist. Durch die sich aus der Anpassungsbewegung ergebende unterschiedliche räumliche Orientierung des betreffenden Abschnittes des Basiselementes 32 verschwenkt der mit dem entsprechenden Abschnitt des Basiselementes 32 verbundene Finger 34 um eine quer zur Förderrichtung F liegende Schwenkachse in Richtung B. Je nach Umlenkungsrichtung im Umlenkungsbereich kann der Finger 34 in Förderrichtung F gesehen nach vorne oder hinten verschwenkt werden. Bei einer Verschwenkungsbewegung nach vorne spreizt sich der Zwischenraum 36 zwischen dem verschwenkten Finger 34 und dem nachfolgenden Finger 34 auf, während sich der Zwischenraum 36 bei einer Verschwenkbewegung nach hinten verkleinert. Je kleiner der Biegeradius ist, dem sich der jeweilige Abschnitt des Basiselementes 32 anpaßt, um so größer ist die Verschwenkbewegung eines zugehörigen Fingers 34 im wesentlichen parallel zur Förderrichtung F des Förderorgans 6, und um so stärker verändert sich das Abstandsmaß im verbleibenden Zwischenraum 36 zum benachbarten Finger 34.

Die Zwischenräume 36 können über ihre Höhe H ein unterschiedliches Abstandsmaß zwischen den benachbarten Fingern 34 aufweisen. Ein unterschiedliches Abstandsmaß kann sich beispielsweise ergeben, wenn ein Finger 34 in einem zum Basiselement 32 entfernteren Abschnitt schmaler ist als in einem zum Basiselement 32 näher liegenden Abschnitts. Genauso ist es möglich, daß der Zwischenraum 36 zwisehen zwei benachbarten Fingern 34 in einer geraden Transportebene in einem zum Basiselement 32 entfernteren Abschnitt breiter ist als in einem zum Basiselement 32 näher liegenden Abschnitt. Auch können die beiden Möglichkeiten, die Finger 34 und die Zwischenräume 36 mit unterschiedlichen Maßen zu versehen, in einer geeigneten Weise miteinander kombiniert werden, wie das in dem Ausführungsbeispiel in Fig. 4 gezeigt ist.

An dem in Fig. 4 dargestellten Basiselement 32 sind mehrere Finger 34 befestigt, es ist jedoch auch möglich, jeweils ein Basiselement 32 mit jeweils einem Finger 34 vorzusehen. Bei einer solchen Ausgestaltung müssen über die Länge eines Förderorgans 6 viele Basiselemente 32 am Förderorgan 6 oder dem Förderriemen 14 befestigt werden. Aus der Befestigung mehrerer Finger 34 an einem Basiselement 32 ergibt sich eine Montagevereinfachung. Außerdem verteilen sich Belastungskräfte, die auf einen einzelnen Finger 34 einwirken, besser über die Länge eines längeren Basiselementes 32. Um eine gute Abstützwirkung entfalten zu können, können auf der den Ablageflächen 10 abgewandten Seiten eines Fingers 34 über einen Teil oder die gesamte Höhe des Fingers 34 reichende Stützrippen 38 vorgesehen sein. Ein Finger 34 verfügt in Querrichtung zur Förderrichtung F über eine begrenzte Beweglichkeit. Das Maß der Beweglichkeit in Querrichtung kann durch die Form und das verwendete Material für den Finger 34, aber auch durch die Form, das Material und die Abmessungen der Stützrippe 38 beeinflußt werden. Die Beweglichkeit sollte so bemessen sein, daß die Biegekräfte, die von einem Finger 34 aufgenommen werden können, ausreichen, um die üblicherweise auf einer Fördervorrichtung 2 beförderten Transportgüter zurückhalten zu können.

Im Bereich des Abschnittes D ist das Basiselement 32 abschnittweise höher geführt als in anderen Abschnitten. Eine solche Höherführung kann vorgesehen sein, um Befestigungselemente des Förderorgans 6 zum Förderriemen 14 zu überbrücken und einen entsprechenden Durchlaß zu schaffen.

Im Ausführungsbeispiel ragen die Finger 34 in einer annähernd senkrechten Richtung vom Basiselement 32 auf. Es ist jedoch auch möglich, einzelne oder mehrere Finger 34 in einer von der senkrechten Linie abweichenden Richtung vom Basiselement 32 aufragen zu lassen. Um eine Kollision von Fingern 34 in einem Umlenkungsbereich zu vermeiden, ist es auch möglich, aufeinanderfolgende Finger 34 in voller Höhe oder in einer Teilhöhe in einer unterschiedlichen Winkellage anzuordnen, so daß diese im Bereich einer Verschwenkung in eine Richtung parallel zur Förderrichtung des Förderorgans 6 berührungslos oder nur mit geringen Biegekräften aneinander vorbeischwenken können.

In einer Ausgestaltung der Erfindung sind die Basiselemente 32 am umlaufenden Förderriemen 14 befestigt. Dabei weisen die Basiselemente 32 ein so flaches Profil auf, daß deren Bauhöhe in etwa der neutralen Phase des Förderriemens entspricht und diese kaum über die Förderriemen 14 hervorstehen.

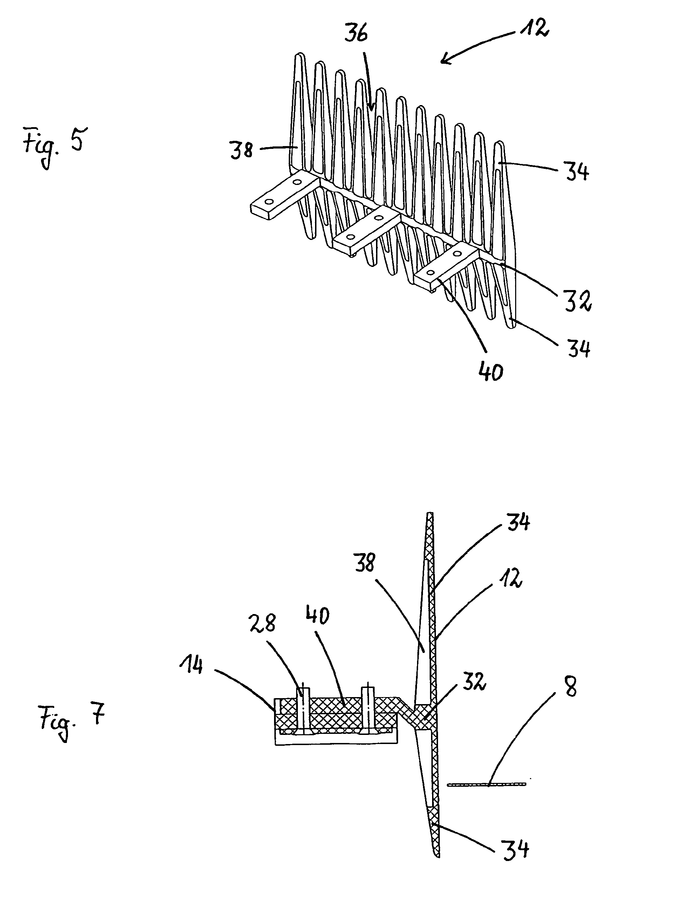

In Fig. 5 ist eine alternative Gestaltung eines Stützteils 12 gezeigt. Bei dem dort gezeigten Stützteil 12 ist das Basiselement 32 nicht an der Unterseite des Stützteils 12, sondern etwa im Übergang zwischen dem unteren und mittleren Drittel beziehungsweise etwa dem mittleren Bereich der Höhe H des Stützteils 12 angeordnet. Die Finger 34 des in Fig. 5 gezeigten Stützteils 12 ragen also bis in einen Bereich unterhalb des Basiselementes 32. Die das Basiselement 32 nach unten überragenden Abschnitte der Finger 34 verlaufen im Ausführungsbeispiel annähernd horizontal wie auch die das Basiselement 32 überragenden Abschnitte. Die das Basiselement 32 nach unten überragenden Abschnitte der Finger 34 können jedoch auch angewinkelt sein, um auf diese Weise das benachbarte Fördertuch 8 zu untergreifen. Wird das Fördertuch 8 in diesem Bereich durch ein Transportgut belastet, drückt dieses auf die nach unten weisenden Abschnitte der Finger 34. Durch die Drehgelenkwirkung des annähernd im mittleren Abschnitt befindlichen Basiselements 32 werden die dieses nach oben hin überragenden Abschnitte der Finger nach innen auf das Transportgut zu gedrückt. Die auf die unteren Abschnitte der Finger 34 drückende Last des Transportgutes erhöht auf diese Weise die potentielle Rückhaltekraft der oberen Abschnitte der Finger 34.

Das in Fig. 5 gezeigte Basiselement 32 verfügt auf einer Seite über Stützlaschen 40, mit denen das Stützteil 12 am Förderorgan 6, dem Fördertuch 8 und/oder am Förderriemen 14 befestigt werden kann. Die Stützlaschen 40 können so lang ausgebildet sein, daß sie sich über die gesamte Breite des Förderriemens 14 erstrecken können.

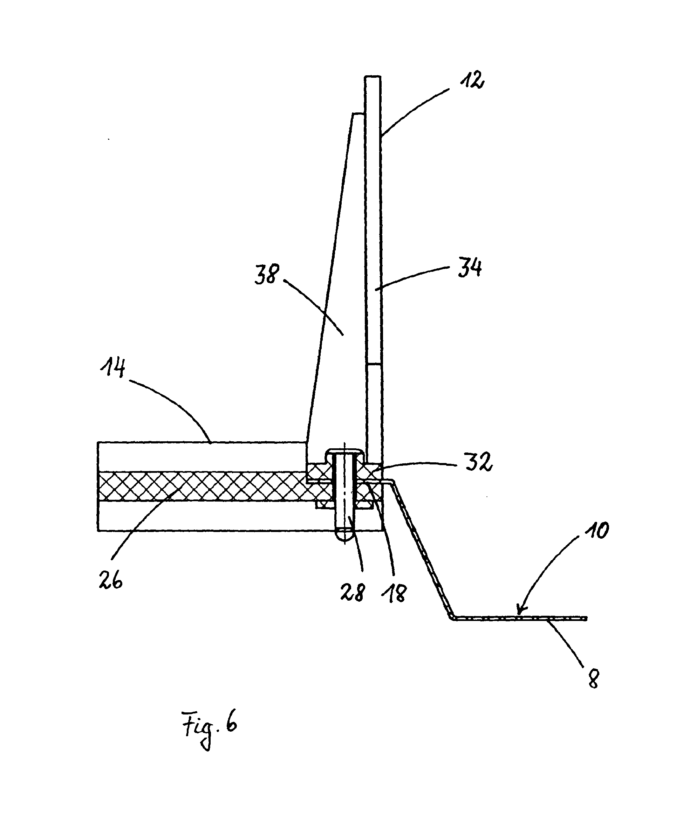

In Fig. 6 ist eine Querschnittsansicht auf ein auf einem Fördertuch und Förderriemen befestigtes Stützteil dargestellt. In dieser Darstellung ist gut erkennbar, daß die Förderriemen 14 an ihren einander zugewandten Innenseiten Ausnehmungen 16 aufweisen, in die seitliche Ränder 18 des Fördertuchs 8 eingelegt sind, und im Überlappungsbereich der Ränder des Fördertuchs 8 mit dem Förderriemen 14 Stützteile 12 befestigt sind, die sich über die Ebene der Ablagefläche 10 erheben. Bei dieser Anordnung ergibt sich eine gute Abdichtung in der Übergangszone zwischen dem Fördertuch 8 und dem Förderriemen 14 gegen unerwünschte Verluste. Auch ist gut erkennbar, daß das Stützteil 12 das auf dem Fördertuch 8 beförderte Transportgut gut gegen ein seitliches Herunterfallen abzustützen vermag.

Das Fördertuch 8 und das Stützteil 12 sind durch eine gemeinsame Niete 28 am Förderriemen 14 befestigt, wodurch sich die Herstellungskosten verringern. Zudem ergibt sich durch die vergleichsweise großflächige Auflage der Unterseite des Basiselements 32 auf dem Rand 18 des Fördertuchs 8 und dem Zusammenpressen der Materiallagen durch die Niete 28 eine vergleichsweise hohe Klemmkraft auf den Rand des Fördertuchs 8, durch die diese sicher in ihrer Einbaulage gehalten ist. Auch können sich einwirkende Lasten annähernd gleichmäßig über die gesamte umliegende Kontaktfläche verteilen, so daß punktuelle Spitzenlasten nicht mehr nur punktuell auf die Verbindungszone einwirken, durch die das Fördertuch 8 an dieser Stelle einreißen könnte.

Aus der Ansicht in Figur 6 ist weiter ersichtlich, daß das Fördertuch 8 unter die Ebene des Förderriemens 14 durchhängen kann. Ein solcher Durchhang kann erwünscht sein, um das auf dem Fördertuch 8 beförderte Transportgut nicht nur vom Stützteil 12, sondern zusätzlich auch oder nur vom Förderriemen 14 abzustützen. In seitlicher Richtung stellt der Förderriemen 14 einen sehr harten Widerstand dar, gegenüber dem die Stützteile 12 weicher gestaltbar sind.

Eine weitere Gestaltungsalternative ist in Fig. 7 dargestellt. In der Querschnittsansicht ist ein Förderriemen 14 mit dem in Fig. 5 gezeigten alternativ gestalteten Stützteil 12 kombiniert. Es ist erkennbar, daß der nach unten über das Basiselement 32 ragende Abschnitt des Fingers 34 tiefer nach unten ragt als das Fördertuch 8 an seinem tiefsten Punkt. Nach unten hin wird das Fördertuch 8 in dieser Ausgestaltung also über seine volle Höhe seitlich vom Finger 34 abgestützt. Das Fördertuch 8 kann im Bereich des nach unten über das Basiselement 32 ragenden Abschnitts des Fingers 34 mit diesem verbunden werden, allerdings ist diese Möglichkeit in der Fig. 7 nicht näher dargestellt. In Fig. 7 ist vielmehr eine Ausgestaltung gezeigt, bei der der Rand 18 des Fördertuchs 8 nicht in die Ausnehmung 16 eingelegt ist, sondern zumindest abschnittweise nur bis annähernd in den Anstoßbereich mit dem Förderriemen 14 reicht. Der Anstoßbereich der Ränder 18 des Fördertuchs 8 muß nicht auf einer Ebene mit den seitlichen Rändern der Förderriemen 14 liegen, sondern kann auch gestuft in einer darunter liegenden Ebene angeordnet sein. Der Höhensprung wird hier durch die Stützteile 12 überdeckt, deren Finger 34 unter die Förderriemen 14 ragen. Auch müssen die Ränder 18 des Fördertuchs 8 nicht genau in einer vertikalen Linie zu den Seiten der Förderriemen 14 enden, um im Anstoßbereich zu liegen, sondern können dazu auch etwas kürzer oder länger ausfallen. Die Abstützung des Transportgutes und die Abdichtung des Fördertuches 8 gegen Gutverluste im Bereich der Stufe von den Rändern 18 des Fördertuchs 8 zum Förderriemen 14 erfolgt bei dieser Ausgestaltung durch die Stützteile 12. Es ist also so, daß die Erfindung entweder durch das Einlegen des Fördertuchs 8 in die Ausnehmung 16 oder durch die mit dem Förderelement 14 verbundenen und davon bewegten Stützteile 12 oder eine Kombination dieser beiden Elemente realisiert werden kann.

Die unteren Enden der Finger 34 des in Fig. 7 gezeigten Ausführungsbeispiels können einzelnen in Abständen oder gesamt einen unter das Fördertuch 8 weisenden Vorsprung aufweisen, an dem das Fördertuch 8 mit den jeweiligen Fingern 34 verbindbar ist. Dadurch werden die Ränder 18 des Fördertuchs 8 abgestützt und lagefixiert.

Die in den Zeichnungen dargestellten Ausführungsbeispiele dienen lediglich der gegenständlichen Beschreibung der Erfindung und sollen diese keineswegs auf die erläuterten Ausführungsbeispiele beschränken. So ist es dem Fachmann möglich, den Gegenstand der vorstehend offenbarten Erfindung auf seine jeweiligen technischen Anforderungen anzupassen, insbesondere die Gestaltung der Stützteile 12 in beliebiger Form abzuwandeln. Dies kann beispielsweise erfolgen, indem die Form der Finger 34, das Abstandsmaß der benachbarten Finger 34 zueinander und die Höhe der Finger 34 variiert wird. Die Finger 34 müssen auch keine identische Höhe aufweisen, sondern können in der Höhe variieren. Auch kann die Flexibilität sowohl des Basiselementes 32 wie auch der Finger 34 an den jeweiligen Einsatzzweck angepaßt werden. So kann das Basiselement 32 eine größere Flexibilität aufweisen als die Finger 34, oder die Finger 34 weisen in einem Abschnitt eine Einschnürung auf, durch die diese leichter in eine Richtung schwenkbar sind. Auch können die gewünschten flexiblen Eigenschaften eines Stützteils 12 durch unterschiedliche Materialien und Materialmischungen in unterschiedlichen Abschnitten eines Stützteils 12 in gewünschter Weise beeinflußt werden. Schließlich ist darauf hinzuweisen, daß ein Stützteil 12 als günstiges Kunststoff-Spritzgußteil herstellbar ist.

## Patentansprüche

1. Fördervorrichtung (2) mit einem Tragrahmen (4) und einem Förderorgan (6), das zumindest zwei parallel zueinander umlaufend angetriebene Förderriemen (14) und ein zwischen den Förderriemen (14) angeordnetes Fördertuch (8) aufweist, **dadurch gekennzeichnet, daß** die Förderriemen (14) an ihren einander zugewandten Innenseiten Ausnehmungen (16) aufweisen, die sich über die volle Länge der Förderriemen (14) erstrecken, in die Ausnehmungen (16) seitliche Ränder (18) des Fördertuchs (8) eingelegt sind, und das Fördertuch (8) im Bereich der Ausnehmungen (16) über die Ränder (18) mit den Förderriemen (14) verbunden ist, so daß sich über die gesamte Länge der Fördervorrichtung eine vollkommen dichte Anbindung der Ränder (18) des Fördertuchs (8) an die Förderriemen (14) ergibt.

2. Fördervorrichtung nach Anspruch 1 oder 2, **dadurch gekennzeichnet, dass** im Überlappungs- oder Anstoßbereich der Ränder (18) des Fördertuchs (8) mit den Förderriemen (14) Stützteile (12) befestigt sind, die sich über die Ebene der Ablagefläche (10) erheben.

3. Fördervorrichtung nach Anspruch 2, **dadurch gekennzeichnet, daß** das Stützteil (12) auf den seitlichen Rand des Fördertuchs (8) aufgesetzt ist.

4. Fördervorrichtung nach einem der vorhergehenden Ansprüche, **dadurch gekennzeichnet, daß** die Förderriemen (14) mehrlagig aufgebaut sind, die Höhe der Ausnehmung (16) sich nicht über alle Lagen (20) der Förderriemen (14) und insbesondere bis in die Höhe der mittleren Gewebelage und maximal über die halbe Breite der Förderriemen (14) erstreckt" die Höhe (H_{A}) der Ausnehmungen (16) größer oder gleich der Höhe (H_{B}) der seitlichen Ränder (18) des Fördertuchs (8) ist und das Fördertuch (8) mit den Förderriemen (14) durch Kleben und/oder Nieten verbunden ist.

5. Fördervorrichtung nach einem der vorhergehenden Ansprüche, **dadurch gekennzeichnet, daß** die Förderriemen (14) untereinander durch in Abständen über die Länge der Förderriemen (14) verteilt angeordnete Querstäbe (22) verbunden sind, die Querstäbe (22) mit ihrer Unterseite (24) im Bereich der Ausnehmungen (16) auf den seitlichen Rändern (18) des Fördertuches (8) aufliegen und mittels sich durch das Fördertuch (8) hindurch erstreckender Nieten (28), Schrauben, Klammern und dgl. mit den Förderriemen (14) verbunden sind.

6. Fördervorrichtung nach einem der vorhergehenden Ansprüche, **dadurch gekennzeichnet, daß** die seitlichen Ränder (18) des Fördertuches (8) eine geschlossene Materialstruktur aufweisen..

7. Fördervorrichtung nach einem der vorhergehenden Ansprüche, **dadurch gekennzeichnet, daß** die seitlichen Ränder (18) des Fördertuches (8) aus flexiblem Material und/oder aus in zumindest in einer Richtung zugelastischem Material hergestellt sind, und/oder in die seitlichen Ränder (18) des Fördertuches (8) Faserverstärkungen eingearbeitet sind.

8. Fördervorrichtung (2) nach einem der vorhergehenden Ansprüche, **dadurch gekennzeichnet, daß** die Stützteile (12) Bestandteile des endlos umlaufenden Förderorgans (6) sind, der oder die Finger (34) in einer annähernd senkrechten Richtung vom Basiselement (32) aufragen und zumindest das Basiselement (32) des Stützteils (12) aus einem flexiblen Material hergestellt ist.

9. Fördervorrichtung (2) nach einem der vorhergehenden Ansprüche, **dadurch gekennzeichnet, daß** der Finger (34) parallel zur Förderrichtung (F) des Förderorgans (6) mittels einer Veränderung der räumlichen Lage des Basiselementes (32) verschwenkbar ist.

10. Fördervorrichtung (2) nach einem der vorhergehenden Ansprüche, **dadurch gekennzeichnet, daß** der Finger (34) in Querrichtung zur Förderrichtung (F) des Förderorgans (6) in zumindest einem Abschnitt eine Verdickung und/oder eine Stützrippe (38) aufweist.

11. Fördervorrichtung (2) nach einem der vorhergehenden Ansprüche, **dadurch gekennzeichnet, daß** der Finger (34) in einem zum Basiselement (32) entfernteren Abschnitt schmaler ist als in einem zum Basiselement (32) näher liegenden Abschnitt.

12. Fördervorrichtung (2) nach einem der vorhergehenden Ansprüche, **dadurch gekennzeichnet, daß** das Basiselement (32) leistenförmig ausgebildet ist und an einem Basiselement (32) mehrere Finger (34) befestigt sind.

13. Fördervorrichtung (2) nach einem der vorhergehenden Ansprüche, **dadurch gekennzeichnet, daß** zumindest ein Finger (34) eines Stützteils (12) bis in einen Bereich unterhalb des Basiselements (32) ragt und der nach unten über das Basiselement 32 ragende Abschnitt des Fingers 34 tiefer nach unten ragt als das Fördertuch 8 an seinem tiefsten Punkt.

14. Fördervorrichtung (2) nach einem der vorhergehenden Ansprüche, **dadurch gekennzeichnet, daß** das Fördertuch 8 im Bereich des nach unten über das Basiselement 32 ragenden Abschnitts des Fingers 34 mit diesem verbunden ist.

## Claims

1. Conveyor (2) having a supporting frame (4) and having a conveying member (6) which has at least two driving belts (14) which are driven round in a loop in parallel with one another and a conveying belt (8) which is arranged between the driving belts (14), **characterised in that** the driving belts (14) have, on their inner sides which face towards one another, recesses (16) which extend for the entire length of the driving belts (14), lateral edges (18) of the conveying belt (8) are inserted in the recesses (16), and the conveying belt (8) is connected to the driving belts (14) in the region of the recesses (16), via the edges (18), thus producing a fully sealed connection between the edges (18) of the conveying belt (8) and the driving belts (14) over the entire length of the conveyor.

2. Conveyor according to claim 1 or 2, **characterised in that** supporting parts (12) which rise above the plane of the carrying surface (10) are fastened in position in the region where the edges (18) of the conveying belt (8) overlap or abut the driving belts (14).

3. Conveyor according to claim 2, **characterised in that** the supporting part (12) is placed in position on the lateral edge of the conveying belt (8).

4. Conveyor according to one of the foregoing claims, **characterised in that** the driving belts (14) are of multi-layered construction, the depth of the recess (16) does not cover all the layers (20) of the driving belts (14) and extends in particular to the depth of the centre layer of woven fabric and for not more than half the width of the driving belts (14), the depth (H_{A}) of the recesses (16) is equal to or greater than the height (H_{B}) of the lateral edges (18) of the conveying belt (8), and the conveying belt (8) is connected to the driving belts (14) by adhesive-bonding and/or riveting.

5. Conveyor according to one of the foregoing claims, **characterised in that** the driving belts (14) are connected together by transverse bars (22) which are so arranged as to be distributed over the length of the driving belts (14), and the transverse bars (22) rest by their undersides (24) on the lateral edges (18) of the conveying belt (8) in the region of the recesses (16) and are connected to the driving belts (14) by rivets (28), screws, clips or the like which extend through the conveying belt (8).

6. Conveyor according to one of the foregoing claims, **characterised in that** the lateral edges (18) of the conveying belt (8) have a physical structure which is continuous.

7. Conveyor according to one of the foregoing claims, **characterised in that** the lateral edges (18) of the conveying belt (8) are made of flexible material and/or of material which is elastic in tension in at least one direction, and/or fibre reinforcements are incorporated in the lateral edges (18) of the conveying belt (8).

8. Conveyor (2) according to one of the foregoing claims, **characterised in that** the supporting parts (12) are component parts of the continuously circulating conveying member (6), the finger or fingers (34) project up from the base member (32) in an approximately perpendicular direction, and at least the base member (32) of the supporting part (12) is made of a flexible material.

9. Conveyor (2) according to one of the foregoing claims, **characterised in that** the finger (34) can be pivoted parallel to the direction of conveyance (F) of the conveying member (6) by means of a change in the position in space of the base member (32).

10. Conveyor (2) according to one of the foregoing claims, **characterised in that**, in the direction transverse to the direction of conveyance (F) of the conveying member (6), the finger (34) has, in at least one section, a thickening and/or a supporting rib (38).

11. Conveyor (2) according to one of the foregoing claims, **characterised in that** the finger (34) is narrower in a section remote from the base member (32) than in a section situated closer to the base member (32).

12. Conveyor (2) according to one of the foregoing claims, **characterised in that** the base member (32) is in the form of a strip and a plurality of fingers (34) are fastened to a base member (32).

13. Conveyor (2) according to one of the foregoing claims, **characterised in that** at least one finger (34) of a supporting part (12) projects into a region below the base member (32) and that section of the finger 34 which projects downwards beyond the base member 32 projects downwards to a lower point than the conveying belt 8 does at its lowest point.

14. Conveyor (2) according to one of the foregoing claims, **characterised in that** the conveying belt 8 is connected to the finger 34 in the region of that section of the latter which projects downwards beyond the base member 32.

## Revendications

1. Convoyeur (2) comportant un cadre de support (4) et un organe de transport (6), qui comprend au moins deux courroies transporteuses (14) entraînées en circulation parallèlement l'une à l'autre et une toile de transport (8) disposée entre les courroies transporteuses (14), **caractérisé en ce que** les courroies transporteuses (14) présentent sur leurs côtés intérieurs tournés l'un vers l'autre des évidements (16) qui s'étendent sur toute la longueur des courroies transporteuses (14), des bords latéraux (18) de la toile de transport (8) sont déposés dans les évidements (16), et la toile de transport (8) est reliée aux courroies transporteuses (14) au moyen des bords (18) dans la région des évidements (16), de telle manière qu'il en résulte une liaison parfaitement étanche des bords (18) de la toile de transport (8) avec les courroies transporteuses (14) sur toute la longueur du convoyeur.

2. Convoyeur selon la revendication 1 ou 2, **caractérisé en ce que** des pièces d'appui (12), qui s'élèvent au-dessus du plan de la surface de dépôt (10), sont fixées dans la région de chevauchement ou de butée des bords (18) de la toile de transport (8) avec les courroies transporteuses (14).

3. Convoyeur selon la revendication 2, **caractérisé en ce que** la pièce d'appui (12) est posée sur le bord latéral de la toile de transport (8).

4. Convoyeur selon l'une quelconque des revendications précédentes, **caractérisé en ce que** les courroies transporteuses (14) sont construites en plusieurs couches, la hauteur de l'évidement (16) ne s'étend pas sur toutes les couches (20) des courroies transporteuses (14) et s'étend en particulier jusqu'à la hauteur de la couche centrale de tissu et au maximum sur la moitié de la largeur des courroies transporteuses (14), la hauteur (H_{A}) des évidements (16) est supérieure ou égale à la hauteur (H_{B}) des bords latéraux (18) de la toile de transport (8) et la toile de transport (8) est assemblée aux courroies transporteuses (14) par collage et/ou rivetage.

5. Convoyeur selon l'une quelconque des revendications précédentes, **caractérisé en ce que** les courroies transporteuses (14) sont reliées l'une à l'autre par des barres transversales (22) réparties à intervalles sur la longueur des courroies transporteuses (14), les barres transversales (22) s'appuient par leur face inférieure (24) sur les bords latéraux (18) de la toile de transport (8) dans la région des évidements (16) et sont assemblées aux courroies transporteuses (14) par des rivets (28), des vis, des agrafes et analogues qui s'étendent à travers la toile de transport (8).

6. Convoyeur selon l'une quelconque des revendications précédentes, **caractérisé en ce que** les bords latéraux (18) de la toile de transport (8) présentent une structure matérielle fermée.

7. Convoyeur selon l'une quelconque des revendications précédentes, **caractérisé en ce que** les bords latéraux (18) de la toile de transport (8) est fabriquée en une matière flexible et/ou en une matière élastique en traction dans au moins une direction, et/ou des renforts de fibres sont incorporés dans les bords latéraux (18) de la toile de transport (8).

8. Convoyeur (2) selon l'une quelconque des revendications précédentes, **caractérisé en ce que** les pièces d'appui (12) sont des composants de l'organe de transport (6) tournant sans fin, le ou les doigt(s) (34) sont dressés sur l'élément de base (32) dans une direction sensiblement perpendiculaire et au moins l'élément de base (32) de la pièce d'appui (12) est fabriqué en une matière flexible.

9. Convoyeur (2) selon l'une quelconque des revendications précédentes, **caractérisé en ce que** le doigt (34) peut pivoter parallèlement à la direction de transport (F) de l'organe de transport (6) au moyen d'une modification de la position spatiale de l'élément de base (32).

10. Convoyeur (2) selon l'une quelconque des revendications précédentes, **caractérisé en ce que** le doigt (34) présente dans au moins un segment une surépaisseur et/ou une nervure d'appui (38) en direction transversale à la direction de transport (F) de l'organe de transport (6).

11. Convoyeur (2) selon l'une quelconque des revendications précédentes, **caractérisé en ce que** le doigt (34) est plus étroit dans un segment éloigné de l'élément de base (32) que dans un segment situé plus près de l'élément de base (32).

12. Convoyeur (2) selon l'une quelconque des revendications précédentes, **caractérisé en ce que** l'élément de base (32) est réalisé en forme de latte et plusieurs doigts (34) sont fixés à un élément de base (32).

13. Convoyeur (2) selon l'une quelconque des revendications précédentes, **caractérisé en ce qu'**au moins un doigt (34) d'une pièce d'appui (12) pénètre jusque dans une région située en dessous de l'élément de base (32) et le segment du doigt (34) s'étendant vers le bas au-delà de l'élément de base (32) s'étend plus profondément vers le bas que la toile de transport (8) à son point le plus profond.

14. Convoyeur (2) selon l'une quelconque des revendications précédentes, **caractérisé en ce que** la toile de transport (8) est assemblée au doigt (34) dans la région du segment du doigt (34) s'étendant vers le bas au-delà de l'élément de base (32).
